# EUROPÄISCHE PATENTSCHRIFT

(11) **EP 0 734 980 B1**
(45) Veröffentlichungstag und Bekanntmachung des Hinweises auf die Patenterteilung: **29.04.1998**
(21) Anmeldenummer: 96104474.0
(22) Anmeldetag: 21.03.1996
(51) Int. Cl.: B65G 45/12, B65G 45/16

(54) **Förderbandabstreifer für reversierbare Förderbänder**
Conveyor belt-scrapper for reversible belt conveyors
Raclette pour bandes transporteuses réversibles

(30) Priorität: 28.03.1995 DE 29505207 U
(43) Veröffentlichungstag der Anmeldung: 02.10.1996
(73) Patentinhaber: Schulmeistrat, Hans-Dieter, 46354 Südlohn (DE)
(72) Erfinder: Schulmeistrat, Hans-Dieter, 46354 Südlohn (DE)
(74) Vertreter: Hallermann, Dietrich-Otto, Dipl.-Ing. Patentassessor

(56) Entgegenhaltungen:
- EP-A- 0 598 947
- FR-E- 75 846
- US-A- 4 768 645

## Beschreibung

Die Erfindung betrifft einen Förderbandabstreifer für reversierbare Förderbänder mit einer in Breitenrichtung des Förderbandes beiderseits des Förderbandes nachgiebig gelagerten Traverse auf der eine, beispielsweise einen als Hartmetalleiste ausgebildeten Schaber tragende Leiste angeordnet ist, wobei der Schaber unter dem Einfluß der Mitnahme durch das Förderband mit der Traverse aus einer Arbeitsstellung in der er, insbesondere vertikal gegen das Förderband wirkt, in eine Reversierstellung und umgekehrt beim Umsteuern der Förderbandlaufrichtung selbsttätig verschwenkbar ist.

Die im Reversierbetrieb laufenden Förderbänder benötigen an beiden Enden, vornehmlich unterhalb der Antriebs- und Umkehrtrommeln, die Förderbänder reinigende Förderbandabstreifer. Bei derartigen Anordnungen bestehen dahingehend Probleme, die Abstreifer so auszubilden, daß durch die plötzlich auftretende Reversierbarkeit des Förderbandes der Förderbandabstreifer keine Nachteile erleidet. Wenn die Hartmetalleiste bei Wechsel der Richtung des Bandlaufs nicht aus dem Eingriff geführt wird, so wird die Hartmetalleiste stark verschlissen und gleichzeitig zerstört eine solche Abstreiferleiste die Förderbandstruktur in hohem Maße. Um die geschilderten Probleme zu vermeiden, ist es zwangsläufig erforderlich, die an den entgegengesetzten Enden gegen den Untergurt wirkenden Abstreifervorrichtungen mit zusätzlichen, konstruktiv und schaltungstechnisch sehr aufwendigen, zusätzlichen Einrichtungen so in Eingriff mit dem Förderband zu bringen, daß bei Wechsel der Förderbandrichtung keinerlei Nachteile entstehen, wie dies unter anderem in der US-A-4 768 645 beschrieben ist.

Nach der EP-A-0 598 947 A2 ist ein Förderbandabstreifer mit einer auf den Gurt einwirkende Schaber tragenden Traverse beschrieben, die an ihren Enden Schwingen trägt, welche je in einem Torsionsfederelement gelagert sind. Unter dem Einfluß der Mitnahme durch den Gurt werden die Schaber um die Achse der Traverse aus einer Arbeitsstellung in eine Reversierstellung und umgekehrt beim Umsteuern der Bandlaufrichtung über einen vorgegebenen Bogenwinkel selbsttätig verschwenkt.

Der Nachteil eines derartigen Förderbandabstreifers liegt im wesentlichen darin, daß die durch die Mitnahme des Gurtes verschwenkbaren Schaber auch im Reversierbetrieb nicht vollständig aus dem Eingriff mit dem Gurt gelöst werden, wodurch im Reversierbetrieb ein unerwünschtes Abstreifen und ein erheblicher zusätzlicher Verschleiß geschaffen werden.

In der FR-A-75 846 ist unter anderem eine Abstreiferkonstruktion dargestellt, in der die Schaber über einen federkraftbeaufschlagten Arm an den Gurt gedrückt werden, so daß bei einem eventuellen Reversierbetrieb die Schaber in nachgiebiger Art ausweichen können, ohne jedoch den ständigen Kontakt zum Gurt vermeiden zu können.

Demgegenüber liegt der Erfindung die Aufgabe zugrunde, einen Förderbandabstreifer für reversierbare Förderbänder zu schaffen, der, ausgehend von einer den Schaber tragenden und endseitig jeweils nachgiebig gelagerten Traverse, so gestaltet ist, daß zusätzliche Einrichtungen und damit verbundene aufwendige Kontruktionen nicht benötigt werden, und daß der jeweilige Förderbandabstreifer unter Vermeidung von unnötigem Verschleiß sich auf einfache und sichere Weise selbsttätig in Eingriff an die Gurtbandfläche bringt, bzw. sich selbsttätig bei Förderrichtungswechsel aus dem Eingriff löst.

Diese Aufgabe wird erfindungsgemäß dadurch gelöst, daß an der Traverse in Reversierrichtung dem Schaber vorgelagert, eine parallel zum Schaber verlaufende, drehbar um eine Achse (12) gelagerte Mitnehmerrolle angeordnet ist, wobei die Traverse, mit der Mitnehmerrolle über eine parallel zur Achse der Traverse aus der Arbeitsstellung in die Reversierstellung und umgekehrt begrenzt verschwenkbar ist.

Die Traverse, die sowohl die Abstreiferleiste als auch die Mitnehmerrolle trägt, ist an den Enden in bekannter Bauweise nachgiebig, d.h. innerhalb eines Gehäuses, in Torsionsferdern gelagert. Das Gehäuse ist auf einem, um eine Drehachse verschwenkbaren Winkel gelagert, wobei zur Unterstützung der Schwenkbewegung in Reversierrichtung eine Zylinder-Kolbenanordnung vorgesehen werden kann, wobei der Kolben durch eine entsprechende, auf ihn wirkende Feder einen ständigen Druck auf den Winkel dergestalt ausübt, daß bei Stillstand des Bandes der Abstreifer sich selbsttätig aus dem Eingriff ausschwenkt, und somit die Mitnehmerrolle, vornehmlich über die gesamte Bandbreite, mit dem Förderband in Eingriff steht. Die Federkraft der den Kolben teilweise umgebenden Spiralfeder ist über eine Stellschraube unterhalb des Zylindergehäuses einstellbar. Bei dem dann anlaufenden Reversierbetrieb läuft die um eine Achse drehbar angeordnete Mitnehmerrolle mit dem Förderband mit.

Wenn wiederum das Förderband aus dem Reversierbetrieb in Ruhestellung gelangt und die ursprüngliche Förderrichtung wieder aufgenommen wird, so genügt der Bandanlauf, um die Schwenkbewegung selbsttätig wieder so durchzuführen, daß die Mitnehmerrolle nicht mehr im Eingriff ist, und der Abstreifer wieder in seine senkrechte Ausgangsposition verschwenkt wird, und somit in Eingriff mit dem Förderband steht.

Um die Mitnehmerrolle in die entsprechende Position geringfügig unterhalb des Förderbandes zu bringen, und um bei einem geringfügigen Verschwenken um einen kleinen Winkel den Eingriff der Mitnehmerrolle an das Förderband zu erzielen, ist die Achse der Mitnehmerrolle an den Endseiten in zylinderkolbenartigen Halterungen angeordnet. Die zylinderartigen Gehäuse sind fest an der Traverse angeordnet und über Stellschrauben unterhalb der zylinderartigen Gehäuse sind die die Achse der Mitnehmerrolle tragenden Kolben höhenverstellbar.

Die die Traversen an den Enden, einschließlich der Torsionselemente, aufnehmenden Winkel sind über eine Drehanordnung mit einer entsprechend in Gehäuseteilen gelagerten Drehachse gegenüber einer Befestigung verschwenkbar, wobei an der Befestigung eine Einstellbarkeit für die Schwenkbewegung vorgesehen ist.

Die Befestigung, gegenüber welcher der Winkel verschwenkbar ist, ist über eine Hilfskonstruktion in Form einer Konsole mit einer Halterung verbunden, die wiederum das Verbindungselement zum Traggerüst darstellt.

Diese Halterung ist in zweckmäßiger Weise so gestaltet, daß die von ihr getragene gesamte Abstreiferanordnung höhenverstellbar ausgebildet ist. Die Halterung ist als Zylinder-Kolbenanordnung ausgebildet, wobei die Abstreiferanordnung mit dem Zylindergehäuse fest verbunden ist und der in dem Zylindergehäuse nach oben bewegliche Kolben ist am Traggerüst fest installiert. Für die entsprechende Einstellung der Abstreiferleiste unterhalb des Förderbandes muß der Zylinder beiderseits der Fördereinrichtung gegenüber dem am Traggerüst befestigten Kolben verschoben und in der entsprechenden Position arretiert werden.

Ein Ausführungsbeispiel der Erfindung ist in den Zeichnungen dargestellt und wird im nachfolgenden näher erläutert.

Es zeigen:
- Figur 1: einen teilweisen Schnitt durch ein Ausführungsbeispiel des erfindungsgemäßen Förderbandabstreifers unterhalb eines reversierbaren Förderbandes, und
- Figur 2: eine teilweise Frontansicht des in Figur 1 dargestellten Ausführungsbeispieles, ebenfalls im Schnitt.

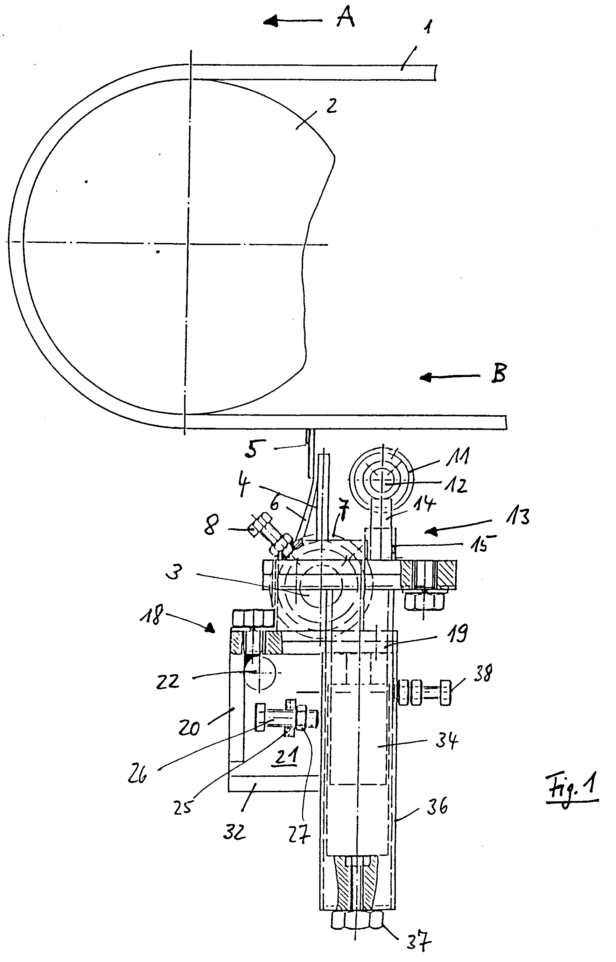

Der Förderbandabstreifer, der nach dem Ausführungsbeispiel in Figur 1 in Eingriff mit dem Förderband 1 steht, wobei der mit A bezeichnete Pfeil die Förderrichtung angibt, ist in nicht näher dargestellter Weise am Traggerüst der Förderbandanlage befestigt. Auf einer parallel zum Förderband 1 verlaufenden rohrartigen Traverse 3 ist eine Leiste 4 befestigt, an deren oberen Ende eine Hartmetalleiste 5 angebracht ist. Unterhalb der Hartmetalleiste 5, d. h. zwischen der Hartmetalleiste 5 und der Leiste 4, ist eine schmutzabweisende Schürze 6 angeordnet.

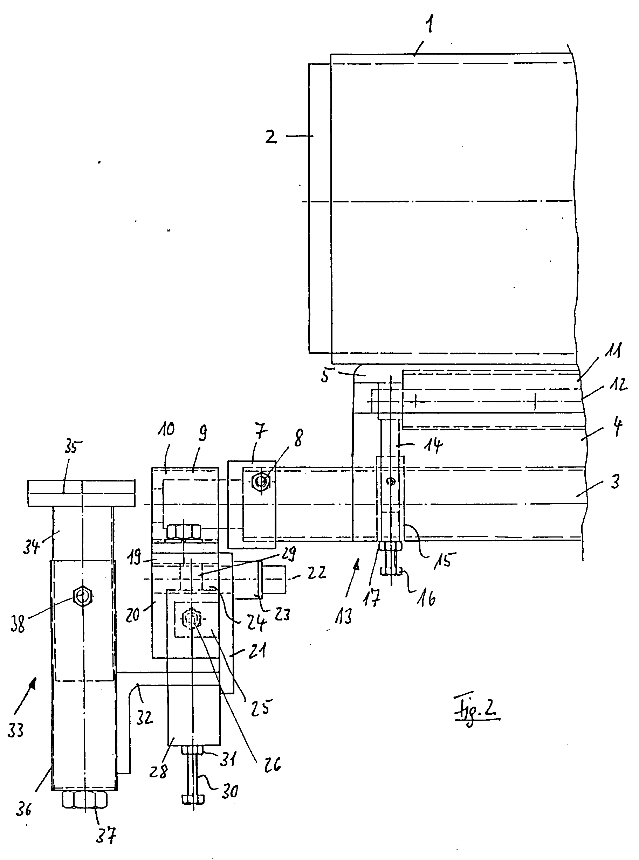

Wie aus der Frontansicht in Figur 2 besser zu entnehmen ist, ist die Traverse 3 endseitig jeweils in Torsionsfederelementen 10 innerhalb der Gehäuse 9 gelagert. Die Traverse 3 umgebend ist ein Einstellring 7 vorgesehen, mit dessen Hilfe und einer Einstellschraube 8 eine genaue Ausrichtung der Traverse 3 ermöglicht wird.

Wie die Figuren 1 und 2 wiedergeben, befindet sich der durch die Leiste 4 und die Hartmetalleiste 5 gebildete Schaber im Eingriff mit dem Förderband 1. In Reversierrichtung des Förderbandes 1, die durch den Pfeil B angedeutet ist, befindet sich die Leiste 4 bzw. der Hartmetalleiste 5 vorgelagert, und ebenfalls an der Traverse 3 befestigt, eine Mitnehmerrolle 11. Die Mitnehmerrolle 11 ist drehbar um eine Achse 12 angeordnet, die an den Enden über Halterungen 13 höhenverstellbar ausgebildet sind.

Die Halterungen 13 bestehen, wie das Ausführungsbeispiel nach Figur 2 wiedergibt, aus einer Kolben-Zylinderanordnung. Die Zylindergehäuse 15 sind mit der Traverse fest verbunden und nehmen Kolben 14 auf, die am oberen Ende jeweils mit der Achse 12 der Mitnehmerrolle 11 verbunden sind. Über entsprechende Stellschrauben 16 am unteren Ende der die Kolben 14 aufnehmenden Gehäuse 15 ist die Höhe des Kolbens 14 bzw. die Höhe der Mitnehmerrolle 11 einstellbar. Die Höhe der Mitnehmerrolle 11 ist, wie aus Figur 1 zu entnehmen ist, so einzustellen, daß bei einer selbsttätigen Schwenkbewegung des Schabers 4, 5 die Rolle 11 in Eingriff mit dem im Reversierbetrieb laufenden Förderband 1 gelangt.

Die die Traverse an den Enden aufnehmenden Gehäuse 9 sind jeweils auf einer horizontalen Winkelplatte 19 eines um eine Drehachse 22 drehbaren Winkels 18 angeordnet. Zur Unterstützung der selbsttätigen Schwenkbewegung des Schabers 4, 5 greift eine Zylinder-Kolbenanordnung von unten gegen die horizontale Winkelplatte 19 und unterstützt die Schwenkbewegung dahingehend, daß bei Stillstand des Förderbandes und Beginn des Reversierbetriebes die Abstreiferhartmetalleiste 5 aus dem Eingriff mit dem Förderband 1 geschwenkt wird und gleichzeitig die Mitnehmerrolle in Eingriff mit dem Förderband 1 gelangt.

Die Schwenkbewegung des Winkels 18 wird gegenüber einer Befestigung 21 durchgeführt, mit der auch die Zylinder-Kolbenanordnung 28, 29 verbunden ist. In dem Zylindergehäuse 28 wird über beispielsweise eine den Kolben 29 teilweise umgebende Spiralfeder dieser mit einer entsprechenden Vorspannung gegen die horizontale Winkelplatte 19 des Winkels 18 gedrückt und fördert die Schwenkbewegung, um beim Reversierbetrieb des Förderbandes 1 den Schaber 4, 5 aus dem Eingriff zu holen. Der federbelastete Druck des Kolbens 29 kann über eine unterhalb des Zylindergehäuses 28 angeordnete Stellschraube 30 eingestellt werden, wobei die vorgespannte Kraft mittels einer Kontermutter 31 festsetzbar ist.

Die den Winkel 18 aufnehmende Befestigung 21 ist jeweils über eine Konsole 32 mit einer Halterung 33 fest verbunden, über welche beidseitig des Förderbandabstreifers dieser mit dem Traggerüst verbunden ist. Die Halterung 33 ist, wie das Ausführungbeispiel nach den Figuren 1 und 2 wiedergibt, höhenverstellbar ausgebildet. Im vorliegenden Fall ist die die gesamte Abstreiferanordnung beidseitig aufnehmende Konsole 32 mit einem beispielsweise im Querschnitt rechteckigen Gehäuse 36 fest verbunden, in dem ein Kolben 34 geführt ist. Der Kolben 34, der am oberen Ende mit Hilfe einer Verbindungsplatte 35 am nicht dargestellten Traggerüst einer Förderbandanlage befestigbar ist, ist über eine Stellschraube 37 gegenüber dem Gehäuse 36 in der Höhe derartig verstellbar, daß die Abstreiferanordnung ordnungsgemäß unterhalb des Förderbandes 1 angebracht werden kann. Die eingestellte Höhe ist über Feststellschrauben 38 arretierbar.

Um die Schwenkbewegung des Winkels 18 in der Größe zu begrenzen, ist an der Befestigung 21 eine Platte 25 angeschweißt, in der eine Schraube 26 angeordnet ist, die mit Hilfe einer Kontermutter 27 so festsetzbar ist, daß die vertikale Winkelplatte 20 des Winkels 18 in der Schwenkbewegung begrenzbar ist.

## Patentansprüche

1. Förderbandabstreifer für reversierbare Förderbänder (1) mit einer in Breitenrichtung des Förderbandes (1) beiderseits des Förderbandes (1) nachgiebig gelagerten Traverse (3), auf der eine, beispielsweise einen als Hartmetalleiste (5) ausgebildeten Schaber tragende Leiste (4) angeordnet ist, wobei der Schaber unter dem Einfluß der Mitnahme durch das Förderband (1) mit der Traverse (3) aus einer Arbeitsstellung, in der er insbesondere vertikal gegen das Förderband (1) wirkt in eine Reversierstellung und umgekehrt beim Umsteuern der Förderbandlaufrichtung selbsttätig verschwenkbar ist, **dadurch gekennzeichnet,** daß an der Traverse (3) in Reversierrichtung dem Schaber (4, 5) vorgelagert, eine parallel zum Schaber (4, 5) verlaufende, drehbar um eine Achse (12) gelagerte Mitnehmerrolle (11) angeordnet ist, wobei die Traverse (3) mit der Mitnehmerrolle (11) über eine parallel zur Achse der Traverse (3) verlaufende Drehachse (22) aus der Arbeitsstellung in die Reversierstellung und umgekehrt begrenzt verschwenkbar ist.

2. Fördergbandabstreifer nach Anspruch 1, **dadurch gekennzeichnet,** daß die Mitnehmerrolle (11) an der Traverse (3) in Richtung auf den Fördergurt (1) höhenverstellbar ausgebildet ist.

3. Förderbandabstreifer nach Anspruch 2, **dadurch gekennzeichnet,** daß die Mitnehmerrolle (11) mittels an den Enden der Achse (12) angeordneter zylinder- und kolbenartigen Halterungen (13) höhenverstellbar ausgebildet ist.

4. Förderbandabstreifer nach Anspruch 3, **dadurch gekennzeichnet,** daß die die Mitnehmerrolle (11) tragende Achse (12) über unterhalb der die Kolben (14) aufnehmenden Zylinder (15) angeordnete, über Kontermuttern (17) festsetzbaren Stellschrauben (16) höhenverstellbar ist.

5. Förderbandabstreifer nach Anspruch 1, **dadurch gekennzeichnet,** daß zur Begrenzung der Verschwenkbarkeit des Winkels (18) eine Arretierung, beispielsweise in Form einer verstellbaren Schraubenanordnung (25, 26, 27), vorgesehen ist.

6. Förderbandabstreifer nach Anspruch 1, **dadurch gekennzeichnet,** daß zur Unterstützung der Schwenkbewegung der Traverse (3) in die Reversierstellung eine gegen den Winkel (18) wirkende Zylinderkolbenanordnung (28, 29) vorgesehen ist.

7. Förderbandabstreifer nach Anspruch 6, **dadurch gekennzeichnet,** daß die zur Unterstützung der Schwenkbewegung des die Traverse (3) tragenden Winkels (18) vorgesehene Zylinderkolbenanordnung (28, 29) aus einem von unten gegen die horizontale Winkelplatte (19) wirkenden, federbelasteten und in einem Zylindergehäuse (28) geführten Kolben (29) besteht.

8. Förderbandabstreifer nach Anspruch 6, **dadurch gekennzeichnet,** daß die Federkraft der den Kolben (29) teilweise umgebenden Spiralfeder über eine Stellschraube (30) unterhalb des Zylindergehäuses (28) einstellbar ist.

9. Förderbandabstreifer nach Anspruch 1, **dadurch gekennzeichnet,** daß die den verschwenkbaren Winkel (18) tragende Befestigung (21) über eine Konsole (32) mit einer am Traggerüst befestigbaren, höhenverstellbaren Halterung (33) verbunden ist.

10. Förderbandabstreifer nach Anspruch 9, **dadurch gekennzeichnet,** daß die Halterung (33) aus einer im Querschnitt rechteckigen Kolben-Zylinderanordnung (34, 36) besteht, wobei der Kolben (34) jeweils am oberen Ende mit dem Traggerüst über eine Verbindungsplatte (35) verbindbar und der Zylinder (36) die Abstreiferanordnung tragend gegenüber dem Kolben (34) höhenverstellbar ist.

## Claims

1. Conveyer belt scraper for reversible conveyer belts (1) comprising a traverse (3), which is in the direction of width of the conveyer belt (1) resiliently mounted on both sides of the conveyer belt (1) and on which is arranged a ledge (4) which carries, for example, a scraper in the form of a hard-metal ledge (5), and the scraper is automatically pivotal under the effect of pickup by the conveyer belt (1) with the traverse (3) from one operational position, in which is acts in particular vertically against the conveyer belt (1), into a reversing position and vice versa when the movement direction of the conveyer belt is changed, **characterised in that** on the traverse (3) in the reversing direction ahead of the scraper (4, 5) is arranged a pickup roller (11) which extends parallel to the scraper (4, 5) and is rotatable around an axis (12), and the traverse (3) with pickup roller (11) is to a limited extend pivotal from a working position into a reversing position and vice versa via a rotary axis (22) which extends parallel to the axis of the traverse (3).

2. Conveyer belt scraper according to Claim 1, **characterised in that** the pickup roller (11) is designed to be height adjustable on the traverse (3) in direction of the conveyer belt (1).

3. Conveyer belt scraper according to Claim 2, **characterised in that** the pickup roller (11) is designed to be height adjustable by means of cylindrical or piston like holders (13) positioned at the ends of the axis (12).

4. Conveyer belt scraper according to Claim 3, **characterised in that** the axis (12) which carries the pickup roller (11) is height adjustable by means of adjusting screws (16), which are located below the cylinders (15) which accommodate the pistons (14) and secured by means of counter-nuts (17).

5. Conveyer belt scraper according to Claim 1, **characterised in that** an arresting means, for example in the form of an adjustable bolt arrangement (25, 26, 27), is provided to limit the pivotability of the angle (18).

6. Conveyer belt scraper according to Claim 1, **characterised in that** a cylinder piston arrangement (28, 29) which acts against the angle (18) is provided to assist the pivotal movement of the traverse (3) into the reversing position.

7. Conveyer belt scraper according to Claim 6, **characterised in that** the cylinder piston arrangement (28, 29) provided to assist the pivotal movement of the angle (18) which carries the traverse (3) is composed of a piston (29), which is springloaded and guided in a cylinder housing (28) and which acts from below against the horizontal angle plate (19).

8. Conveyer belt scraper according to Claim 6, **characterised in that** the spring force of the helical spring which partially encases the piston (29) is adjustable via an adjustment screw (30) below the cylinder housing (28).

9. Conveyer belt scraper according to Claim 1, **characterised in that** the mounting (21) which supports the pivotal angle (18) is connected via a console (32) to a height adjustable support (33) which is attached to the support frame.

10. Conveyer belt scraper according to Claim 9, **characterised in that** the support (33) is composed of a cross-sectionally rectangular piston cylinder arrangement (34, 36), and the piston (34) is respectively connectable at the upper end to the support frame via a connecting plate (35), and the cylinder (36) is height adjustable relative to the piston (34) whilst supporting the scraper arrangement.

## Revendications

1. Dispositif de raclage pour des bandes transporteuses (1) effectuant un mouvement en navette, comportant une traverse (3) montée de manière flexible sur la largeur de la bande transporteuse (1) de part et d'autre de la bande transporteuse (1), sur laquelle est disposée par exemple une moulure portant une racle réalisée sous forme d'une moulure (5) en métal dur, la racle étant à même de pivoter automatiquement sous l'influence de l'entraînement par la bande transporteuse (1) avec la traverse (3) depuis une position de travail dans laquelle elle est active, en particulier à la verticale, contre la bande transporteuse (1) jusque dans une position réversible et vice versa lors du renversement de la marche de la direction de défilement de la bande transporteuse, caractérisé en ce qu'un rouleau d'entraînement (11) monté en rotation autour d'un axe (12) et s'étendant parallèlement à la racle (4, 5) est disposé sur la traverse (3) en amont de la racle (4, 5) dans la direction réversible, la traverse (3) munie du rouleau d'entraînement (11) étant à même de pivoter de manière limitée autour d'un axe de rotation (22) s'étendant parallèlement à l'axe de la traverse (3), depuis la position de travail jusque dans la position réversible et inversement.

2. Dispositif de raclage pour bande transporteuse selon la revendication 1, caractérisé en ce que le rouleau d'entraînement (11) est réalisé de manière réglable en hauteur sur la traverse (3) dans la direction de la courroie transporteuse (1).

3. Dispositif de raclage pour bande transporteuse selon la revendication 2, caractérisé en ce que le rouleau d'entraînement (11) est réalisé de manière réglable en hauteur au moyen de dispositifs de fixation (13) du type à cylindres et pistons disposés contre les extrémités de l'axe (12).

4. Dispositif de raclage pour bande transporteuse selon la revendication 3, caractérisé en ce que l'axe (12) portant le rouleau d'entraînement (11) est réglable en hauteur via des vis de réglage (16) qui peuvent être serrées via des contre-écrous (17) disposés en dessous des cylindres (12) dans lesquels viennent se loger les pistons (14).

5. Dispositif de raclage pour bande transporteuse selon la revendication 1, caractérisé en ce que, pour limiter l'aptitude au pivotement de l'équerre (18), on prévoit un dispositif d'arrêt, par exemple sous la forme d'un agencement à vis réglable (25, 26, 27).

6. Dispositif de raclage pour bande transporteuse selon la revendication 1, caractérisé en ce que, pour soutenir le mouvement de pivotement de la traverse (3) dans la position réversible, on prévoit un agencement à cylindres-pistons (28, 29) ayant un effet antagoniste sur l'équerre (18).

7. Dispositif de raclage pour bande transporteuse selon la revendication 6, caractérisé en ce que l'agencement à cylindres-pistons (28, 29) prévu pour soutenir le mouvement de pivotement de l'équerre (18) portant la traverse (3) est constitué par un piston (29) chargé par un ressort et guidé dans un logement de cylindre (28), s'exerçant à partir du bas contre la plaque horizontale (19) de l'équerre.

8. Dispositif de raclage pour bande transporteuse selon la revendication 6, caractérisé en ce que la force du ressort en spirale entourant partiellement le piston (29) peut être réglée via une vis de réglage (30) disposée en dessous du logement de cylindre (28).

9. Dispositif de raclage pour bande transporteuse selon la revendication 1, caractérisé en ce que la fixation (21) portant l'équerre pivotante (18) est reliée via une console (32) à un dispositif de fixation (33) réglable en hauteur, qui peut être fixé au bâti de support.

10. Dispositif de raclage pour bande transporteuse selon la revendication 9, caractérisé en ce que le dispositif de fixation (33) est constitué par un agencement à pistons-cylindres (34, 36) de section transversale rectangulaire, le piston (34) pouvant être relié respectivement à l'extrémité supérieure avec le bâti de support via une plaque de liaison (35) et le cylindre (36) portant l'agencement de raclage peut être réglé en hauteur par rapport au piston (34).
